# EUROPÄISCHE PATENTANMELDUNG

(11) **EP 1 288 749 A2**
(43) Veröffentlichungstag der Anmeldung: **05.03.2003**
(21) Anmeldenummer: 02018500.5
(22) Anmeldetag: 16.08.2002
(51) Int. Cl.: G05B 19/042

(54) **Vorrichtung für den Einsatz in Bussystemen**

(30) Priorität: 28.08.2001 DE 10141894
(71) Anmelder: SIEMENS AKTIENGESELLSCHAFT, 80333 München (DE)
(72) Erfinder: Gabler, Michael, 93047 Regensburg (DE); Haenel, Andre, 93092 Barbing (DE); Kinne, Andreas, 93049 Regensburg (DE); Wucherer, Marc, 93059 Regensburg (DE)

(57) **Zusammenfassung**

Vorgesehen ist Vorrichtung für den Einsatz in Bussystemen, welches in der Lage ist, mit anderen Vorrichtungen und Geräten innerhalb des selben Bussystems zu kommunizieren, wobei die Vorrichtung einen initialen Konfigurationsmodus, in dem von der Vorrichtung nur Konfigurationstelegramme verarbeitet werden können, und einen Betriebsmodus aufweist, in dem nur Betriebstelegramme verarbeitet werden können.

## Beschreibung

Die vorliegende Erfindung bezieht sich auf eine Vorrichtung für den Einsatz in Bussystemen, welche in der Lage ist, mit anderen Vorrichtungen und Geräten innerhalb des selben Bussystemes zu kommunizieren, wie durch den Oberbegriff des Patentanspruches 1 beschrieben.

Bisher wird die Inbetriebnahme und Konfiguration von dezentralen Bussystemen, wie z.B. ein Instabussystem, mittels eines Inbetriebnahmeprotokolls durchgeführt. Im Falle des EIB (European Installation Bus) kommt dabei häufig die ETS (EIB Tool Software) zum Einsatz. Hierbei handelt es sich um eine Software, die auf einem PC bzw. Laptop lauffähig ist, der über eine RS 232-Schnittstelle sowie Busankopplung mit dem Bus verbunden wird. Dabei ist das verwendete Kommunikationsmedium des Busses nicht entscheidend. Eine direkte Verbindung einzelner Teilnehmer innerhalb des Bussystems ist ohne das genannte oder ein ähnliches Tool praktisch nicht möglich.

Darüber hinaus existieren Bussysteme, die dezentral aufgebaut sind und auch entsprechend dezentral in Betrieb genommen werden können. Derartige Bussysteme können jedoch dann nicht zu einem zentralem System mit einer entsprechend erweiterten Funktionalität ergänzt werden.

Insbesondere bei dezentralen Systemen, bei denen das in vielerlei Hinsicht unsichere und darüber hinaus offene Medium Funk verwendet wird, taucht das Problem auf, dass bei der Inbetriebnahme des Bussystemes verhindert werden muss, dass die Geräte des in Betrieb zu nehmenden Bussystems versehentlich mit Geräten einer benachbarten Installation verknüpft werden.

Um diesem Problem zu begegnen wird bei dem zu installierenden System die Empfängerempfindlichkeit beim Einlernen abgesenkt.

Dies hat zur Folge, dass sich diejenigen Geräte, die während der Konfiguration miteinander kommunizieren sollen, räumlich nahe beieinander befinden müssen und sich in der Regel nicht an ihrem endgültigen Einbauort befinden können. Diese Vorgehensweise ist nicht nur zeitraubend, sondern auch kostspielig, da die Geräte erst nach der Erstellung der Verknüpfungen an ihren endgültigen Einbauort gebracht werden können. Dies ist insbesondere bei netzbetriebenen Geräten umständlich. Dadurch wird Arbeitskraft gebunden, die anderweitig sinnvoll eingesetzt werden könnte.

Es ist die Aufgabe der vorliegenden Erfindung, dass eine Vorrichtung für den Einsatz in Bussystemen in der Lage ist, mit anderen Vorrichtungen und Geräten innerhalb des selben Bussystems zu kommunizieren und Verknüpfungen mit anderen Geräten desselben Bussystems zu konfigurieren, ohne dass eine räumliche Nähe zu einem Gerät, mit dem die Vorrichtung während der Konfiguration kommunizieren soll, notwendig ist und die ohne zusätzliches Konfigurationstool auskommt.

Diese Aufgabe wird durch die Merkmale des unabhängigen Patentanspruches 1 gelöst, wobei zweckmäßige Ausführungsformen durch die Merkmale der Unteransprüche beschrieben sind.

Vorgesehen ist dabei eine Vorrichtung für den Einsatz in Bussystemen, welche in der Lage ist, mit anderen Vorrichtungen und Geräten innerhalb des selben Bussystems zu kommunizieren, welche sich nach Maßgabe der Erfindung dadurch auszeichnet, dass sie einen Konfigurationsmodus, in dem von der Vorrichtung Konfigurationstelegramme verarbeitet werden können, und einen Betriebsmodus aufweist, in dem Betriebstelegramme verarbeitet werden können.

Die Vorrichtung kann dabei derart ausgestaltet sein, dass eine manuelle Manipulationseinrichtung vorgesehen ist, mit deren Hilfe der Konfigurationsmodus einschaltbar ist.

Die Vorrichtung kann darüber hinaus auch derart ausgestaltet sein, dass ein Sensorkanal und ein Aktorkanal vorgesehen ist. Dabei ist es weiterhin bevorzugt, dass die Vorrichtung eine Einrichtung aufweist, die es ermöglicht, die Kanäle separat in den Konfigurationsmodus zu schalten.

Die Vorrichtung nach Maßgabe der Erfindung kann auch derart ausgestaltet sein, dass eine Indikatoreinrichtung zur Bezeichnung des jeweiligen Modus vorgesehen ist, wobei die Indikatoreinrichtung eine akustische oder visuelle Signalisierung liefern kann.

Weiterhin bevorzugt ist, dass der Betriebszustand der Vorrichtung aus dem Konfigurationszustand durch die Verarbeitung eines Konfigurationstelegramms auf dem Bussystem einschaltbar ist.

Vorgesehen ist schließlich auch ein Verfahren zur Konfiguration von Vorrichtungen eines dezentralen Bussystems wie vorhergehend beschrieben, nach welchem über das Bussystem Konfigurationstelegramme verschickt werden, wobei die Konfigurationstelegramme von denjenigen Vorrichtungen verarbeitet werden, die sich im Konfigurationsmodus befinden, und wobei diese Vorrichtungen den Abschluss der Verarbeitung der Konfigurationstelegramme durch Umschalten in den Betriebsmodus quittieren.

Auf medienspezifische Besonderheiten wie diese bei offenen Medien, z.B. Funk, braucht bei dieser Art von Konfiguration bzw., bei derartigen Vorrichtungen , wie sie durch die vorliegenden Erfindung vorgesehen sind, keine Rücksicht genommen zu werden. Die Busteilnehmer bzw. Vorrichtungen können noch vor der Inbetriebnahme und Identifizierung im Bussystem an deren Bestimmungsort installiert werden.

So kann beispielsweise bei einem Bussystem der Installationstechnik, wie es der EIB oder auch KNX-Bus darstellt, die Geräte fest an ihren Einbauorten installiert werden, unabhängig von der jeweiligen Art, d.h. unabhängig davon ob es sich um Unter- oder Aufputzgeräte handelt, und nach diesen Schritten in das Kommunikationsnetz aufgenommen werden. Diese Art der Inbetriebnahme hat den Vorteil, dass zugleich geprüft wird, ob die Geräte am jeweiligen Einbauort über das Übertragungsmedium miteinander kommunizieren können.

Gleichzeitig wird durch das Schalten aller Geräte in einen Konfigurationsmodus verhindert, dass zum Zeitpunkt der Inbetriebnahme Informationen von Geräten der Nachbarinstallation ungewollt abgespeichert werden, da die von den Geräten im Konfigurationsmodus gesendeten Telegramme speziell gekennzeichnet sind. Nur solche speziell gekennzeichneten Telegramme werden von einem Empfänger im Konfigurationsmodus ausgewertet und die enthaltene Geräteinformation abgespeichert.

Das Verfahren bzw. die Vorrichtung nach Maßgabe der Erfindung eignet sich ebenso für mehrkanalige Geräte, wie z.B. Zweifach-Taster oder 4fach-Aktor. Im Falle eines mehrkanaligen Sensors wird das Gerät zunächst in den Konfigurationsmodus geschaltet. Dies kann z.B. durch Drücken einer Taste oder durch Annäherung eines Magneten an das Gerät oder durch Betätigen eines DIL-Schalters erfolgen. Am Gerät wird akustisch oder visuell der Konfigurationsmodus signalisiert. Die Auswahl des entsprechenden Sensorkanals kann durch Betätigen des Sensors selbst geschehen, z.B. Drücken der Tasterwippe. Es ist auch möglich, dass der Sensorkanal durch einen DIL-Schalter repräsentiert wird und dieser statt des Sensors bedient wird. Im letzteren Fall erfolgt das Schalten in dem Konfigurations-Modus und das Betätigen des Sensors zusammen durch Betätigen eines DIL-Schalters. Das Gerät quittiert die Aussendung eines Telegramms, indem es das Konfigurationssignal zurücknimmt.

Im Fall eines mehrkanaligen Aktors wird beim Schalten des Geräts in den Konfigurationsmodus zusätzlich der Aktorkanal ausgewählt. Der ausgewählte Aktorkanal wird durch ein visuelles, z.B. durch eine LED, oder akustisches, z.B. durch einen Piepser, Signal angezeigt. Empfängt dieser Aktor nun ein Telegramm von einem Sensor, der sich ebenfalls im Konfigurationsmodus befindet, so wird der aktivierte Aktorkanal mit dem Sensor verbunden. Der Aktor verlässt nun ebenfalls den Konfigurationsmodus, was vorzugsweise akustisch und/oder visuell anzeigt wird und die Konfiguration für diesen Kanal ist abgeschlossen. Erkennt der Aktor einen Fehler bei der Konfiguration, so zeigt er dies an.

Der Vorteil der Vorrichtung und des Verfahrens nach Maßgabe der Erfindung liegt darin, dass eine durchgängige Konfiguration und Inbetriebnahme eines dezentralen oder zentralen Bussystems möglich wird. Dabei ist die Funktionsart der Geräte und Vorrichtungen die gleiche. Die Geräte können an ihrem endgültigen Einbauort in Betrieb genommen werden, ohne Gefahr, dass aufgrund von Schalt- bzw. Betriebstelegrammen aus einer Nachbarinstallation fehlerhafterweise Verknüpfungen erstellt werden. Die Konfiguration kann dabei ohne zusätzliches Software-Tool erfolgen.

Die Erfindung bietet somit die Möglichkeit, ein dezentral verteiltes Multimaster-Bussystem ohne Hilfsmittel, wie beispielsweise ein Konfigurationstool, in Betrieb zu nehmen, ohne dabei die örtlich gegebene Installation bzw. die Positionen der Busteilnehmer, -geräte oder -vorrichtungen zu ändern.

Innerhalb des Bussystems kann der Anwender die Kommunikationspartner sowohl einzeln bzw. in Kombination, als auch zentral in Betrieb nehmen. Dabei wird bei der dezentralen Inbetriebnahme ein einfaches und logisch durchgängiges Verfahren verwendet, unabhängig davon, ob es sich um unidirektionale und/oder bidirektionale Aktoren und/oder Sensoren handelt.

Weitere Eigenschaften und Vorteile ergeben sich aus der folgenden Beschreibung bevorzugter Ausführungsformen der vorliegenden Erfindung unter Bezugnahme auf die beigefügten Zeichnungen; darin zeigt:
- Fig. 1: die schematische, ausschnittsweise Darstellung eines komplett dezentralen Bussystems in direkter Kommunikation;
- Fig. 2: die schematische, ausschnittsweise Darstellung eines komplett dezentralen Bussystems mit Kommunikation über einen entsprechenden Verstärker/Weiterleiter; und
- Fig. 3: die schematische, ausschnittsweise Darstellung eines zentralen Bussystems mit den selben Komponenten wie in den Fig. 1 und 2.

Im folgenden werden drei Beispiele von funkgestützten Bussystemen für die Installationstechnik beschrieben.

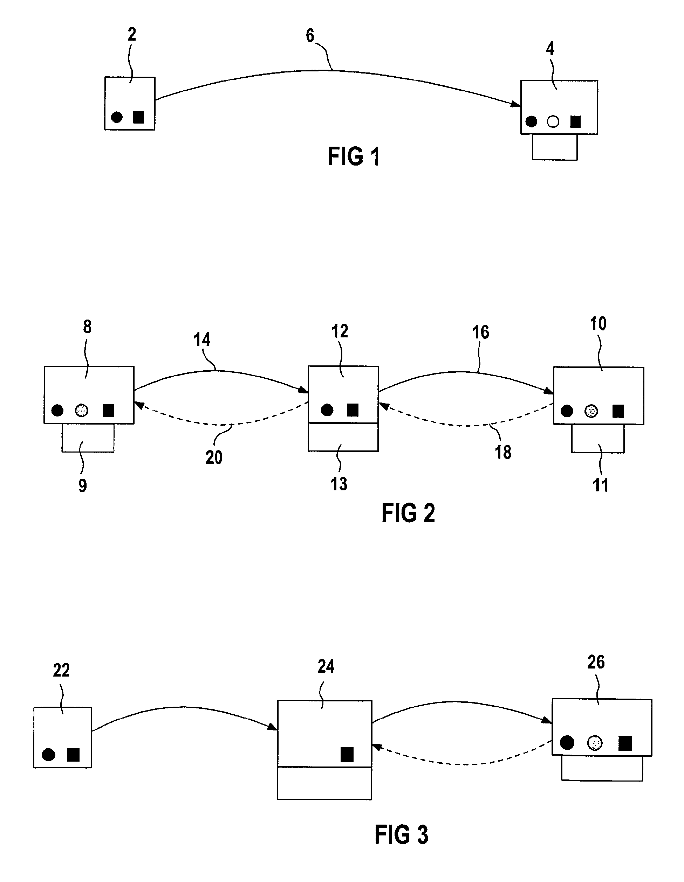

Die Fig. 1 zeigt die schematische, ausschnittsweise Darstellung eines komplett dezentralen Bussystems in direkter Funkkommunikation. Dabei soll eine Kommunikation zwischen einem unidirektionaler Sender 2 und einem bidirektionalen Aktor 4 hergestellt werden. Dabei wird keinerlei Hilfe in Form eines Tools oder einer anderen Gerätschaft verwendet. Die Geräte 2, 4 sollen sich jeweils festinstalliert in den entsprechenden Einbauorten im Gebäude (nicht dargestellt) befinden.

Der Aktor 4 wird manuell in den Konfigurations- oder Inbetriebnahmemodus versetzt. Hier realisiert durch Betätigen eines DIL-Schalters oder einer Programmiertaste (nicht dargestellt). Automatisch wird eine LED in ein kontinuierlichen Blickmodus gesetzt, so dass dem Benutzer dieser Zustand angezeigt wird. Das Gerät wartet nun auf ein Einlerntelegramm auf dem Funkbus. Nun wird an dem Sender 2 durch Betätigen eines DIL-Schalters, der einem Sensorkanal logisch zugeordnet ist (z.B. Tasterwippe) (nicht dargestellt) ein Telegramm 6 ausgelöst welches von dem Aktor 4 empfangen und verarbeitet wird. Der Aktor 4 verlässt nach der Verarbeitung des Telegramms 6 automatisch den Konfigurationsmodus. Danach ist der Sender 2 dem Aktor 4 durch eine eindeutige Identifizierung bekannt. Die Daten werden abgelegt, die Kommunikationsfähigkeit des Senders 2 und des Aktors 4 ist hergestellt und die funktionale Kombination ist gegeben.

Die Fig. 2 zeigt die schematische, ausschnittsweise Darstellung eines komplett dezentralen Bussystems mit Kommunikation über einen entsprechenden Verstärker/Weiterleiter, wobei dezentrale Inbetriebnahme von Funkbusteilnehmern über den Verstärker illustriert werden soll.

Bei der in Fig. 2 dargestellten Anordnung soll die Kommunikation zwischen einer bidirektionalen Sender/Aktor-Kombination 8 und einer bidirektionalen Sender/Aktor-Kombination 10 hergestellt werden. Die Geräte befinden sich dabei ebenfalls jeweils festinstalliert in den entsprechenden Einbauorten im Gebäude (nicht dargestellt).

Bei der in Fig. 2 dargestellten Installation kann jedoch beispielsweise aus funktechnischen Gründen keine direkte Kommunikationsverbindung zwischen den Geräten 8, 10 aufgebaut werden, so dass in diesem Fall ein Verstärker/Weiterleiter 12 zwischen die Kommunikationspartner 8, 10 installiert ist.

Die Inbetriebnahme und Konfiguration der Kommunikation erfolgt dabei nach dem folgenden Schema:

Die Sender/Aktor-Kombination 10 wird manuell in den Konfigurationsmodus geschaltet, hier realisiert durch Betätigen eines DIL-Schalters (nicht dargestellt). Automatisch beginnt eine LED zyklisch zu blinken, so dass dem Benutzer dieser Zustand angezeigt wird. Das Gerät ist nun bereit, ein Einlerntelegram vom Funkbus zu empfangen. Im zweiten Schritt wird der Verstärker/Repeater 12 in gleicher Weise in den Konfigurationsmodus versetzt.

Wird nun an der Sender/Aktor-Kombination 8 ein einem Sensorkanal logisch zugeordneter DIL-Schalter betätigt, so sendet Gerät 1 ein Telgramm 14 aus, welches vom Verstärker/Repeater 12 empfangen und verarbeitet wird. Der Verstärker/Repeater 12 leitet zum einen dieses Telegramm 14 als Telegramm 16 weiter und speichert zum anderen die Geräteinformation der Sender/Aktor-Kombination 8 in einem Speicher 13. Das weitergeleitete Telegramm 16 wird von der Sender/Aktor-Kombination 10 empfangen und auch hier wird die Geräteinformation der Sender/Aktor-Kombination 8 in einem Speicher 11 gespeichert. Die Sender/Aktor-Kombination 10 antwortet mit einen Response hierauf, indem es seine Geräteinfo 18 versendet. Danach verlässt es sofort den Konfigurationsmodus, woraufhin die Sender/Aktor-Kombination 8 der Sender/Aktor-Kombination 10 durch eine eindeutige Identifizierung bekannt ist. Das Antworttelegramm 18 wird ebenso verarbeitet wie das erste, d. h. die Geräteinformation der Sender/Aktor-Kombination 10 wird im Speicher 13 gespeichert und weitergeleitet. Auch der Verstärker/Repeater 12 verlässt den Konfigurationsmodus sofort. Die im weitergeleiteten Telegramm 20 enthaltene Geräteinformation der Sender/Aktor-Kombination 10 wird im Speicher 9 abgelegt. Die Sender/Aktor-Kombination 10 verlässt den Konfigurationsmodus. Somit ist die Kommunikationsfähigkeit der Geräte 8, 10, 12 hergestellt und die funktionale Kombination ist gegeben. Dabei werden nur die Telegramme von Geräten, die dem Verstärker/Repeater 12 bekannt sind, weitergeleitet.

In der Fig. 3 wird in schematischer Art und Weise die zentrale Inbetriebnahme mittels einer Zentraleinheit dargestellt. Dabei soll eine Kommunikation zwischen einem unidirektionaler Sender 22, einer Zentraleinheit 24 und einer bidirektionaler Sender/Aktor-Kombination 26 hergestellt werden. Dabei soll die eigentliche Inbetriebnahme bzw. die Konfiguration der Busteilnehmer 22, 26 mittels der Zentraleinheit 24 durchgeführt werden. Die drei Geräte 22, 24, 26 befinden sich jeweils festinstalliert in den entsprechenden Einbauorten im Gebäude (nicht dargestellt).

Die Geräte 22, 26 müssen der Zentraleinheit 24 bekannt gemacht werden, damit in dieser die eigentliche Konfiguration und Inbetriebnahme der Buskommunikation durchgeführt werden kann. Die Einlernphase erfolgt in gleicher Art wir in den oberen Beispielen beschrieben. D.h. die Zentraleinheit 24 wird in den Konfigurationsmodus geschaltet, der unidirektionale Sender 22 sendet seine Information nach bekanntem Schema zur Zentraleinheit 24, woraufhin der unidirektionale Sender 22 der Zentraleinheit 24 bekannt ist.

Die Sender/Aktor-Kombination 26 wird in entsprechender Weise in den Konfigurationsmodus geschaltet und wartet auf ein Einlerntelegram. Dieses wird bei der Zentraleinheit 24 ausgelöst. Nach dem Antwort-Telegramm von der Sender/Aktor-Kombination 26 sind sich also Gerät 26 und Gerät 24 gegenseitig bekannt.

Nun kann die Verknüpfung des unidirektionalen Senders 22 und der Sender/Aktor-Kombination 26 innerhalb der Zentraleinheit 22 beispielsweise mittels eines Bedienfeldes (nicht dargestellt) erfolgen. Weiterhin sind natürlich weitere Geräte mit den vorhandenen kombinierbar und logisch verknüpfbar. Die eigentliche Laufzeit-Kommunikation erfolgt später immer über diese Zentraleinheit 22.

## Patentansprüche

1. Vorrichtung für den Einsatz in Bussystemen, welches in der Lage ist, mit anderen Vorrichtungen und Geräten innerhalb des selben Bussystems zu kommunizieren,
**dadurch gekennzeichnet,**
**dass** die Vorrichtung (2, 4, 8, 10, 12, 22, 24, 26) einen Konfigurationsmodus, in dem von der Vorrichtung (2, 4, 8, 10, 12, 22, 24, 26) Konfigurationstelegramme (6, 14, 16, 18, 20) verarbeitet werden können, und einen Betriebsmodus aufweist, in dem Betriebstelegramme verarbeitet werden können.

2. Vorrichtung nach Anspruch 1,
**dadurch gekennzeichnet,**
**dass** eine manuelle Manipulationseinrichtung vorgesehen ist, mit deren Hilfe der initiale Konfigurationsmodus einschaltbar ist.

3. Vorrichtung nach Anspruch 1 oder 2,
**dadurch gekennzeichnet,**
**dass** ein Sensorkanal und ein Aktorkanal vorgesehen ist.

4. Vorrichtung nach Anspruch 3,
**dadurch gekennzeichnet,**
**dass** eine Einrichtung vorgesehen ist, die es ermöglicht, die Kanäle separat in den Konfigurationsmodus zu schalten.

5. Vorrichtung nach einem der vorhergehenden Ansprüche,
**dadurch gekennzeichnet,**
**dass** eine Indikatoreinrichtung zur Bezeichnung des jeweiligen Modus vorgesehen ist.

6. Vorrichtung nach Anspruch 5,
**dadurch gekennzeichnet,**
**dass** die Indikatoreinrichtung eine akustische Signalisierung liefert.

7. Vorrichtung nach Anspruch 5,
**dadurch gekennzeichnet,**
**dass** die Indikatoreinrichtung eine visuelle Signalisierung liefert.

8. Vorrichtung nach einem der vorhergehenden Ansprüche,
**dadurch gekennzeichnet,**
**dass** der Betriebszustand aus dem Konfigurationszustand durch die Verarbeitung eines Konfigurationstelegramms (6, 14, 16, 18, 20) auf dem Bussystem einschaltbar ist.

9. Verfahren zur Konfiguration von Vorrichtungen eines dezentralen Bussystems nach einem der Ansprüche 1 bis 8,
**dadurch gekennzeichnet,**
**dass** über das Bussystem Konfigurationstelegramme (6, 14, 16, 18, 20) verschickt werden, wobei die Konfigurationstelegramme (6, 14, 16, 18, 20) von denjenigen Vorrichtungen (2, 4, 8, 10, 12, 22, 24, 26) verarbeitet werden, die sich im Konfigurationsmodus befinden, und wobei diese Vorrichtungen (2, 4, 8, 10, 12, 22, 24, 26) den Abschluss der Verarbeitung der Konfigurationstelegramme (6, 14, 16, 18, 20) durch Umschalten in den Betriebsmodus quittieren.
